# EUROPÄISCHE PATENTSCHRIFT

(11) **EP 2 649 118 B1**
(45) Veröffentlichungstag und Bekanntmachung des Hinweises auf die Patenterteilung: **25.02.2015**
(21) Anmeldenummer: 11793417.4
(22) Anmeldetag: 06.12.2011
(51) Int. Cl.: C08J 9/00, C04B 14/06, C08K 3/36, C08K 9/06

(54) **VERBUNDMATERIAL ENTHALTEND NANOPRÖSE PARTIKEL**
COMPOSITE MATERIAL COMPRISING NANOPOROUS PARTICLES
MATÉRIAU COMPOSITE CONTENANT DES PARTICULES NANOPOREUSES

(30) Priorität: 07.12.2010 EP 10193989
(43) Veröffentlichungstag der Anmeldung: 16.10.2013
(73) Patentinhaber: BASF SE, 67056 Ludwigshafen (DE)
(72) Erfinder: SANDLER, Jan Kurt Walter, 69126 Heidelberg (DE); STEINKE, Tobias Heinz, 67346 Speyer (DE); ULANOVA, Tatiana, 67063 Ludwigshafen (DE); HAHN, Klaus, 67281 Kirchheim (DE)
(86) Internationale Anmeldenummer: PCT/EP2011/071837
(87) Internationale Veröffentlichungsnummer: WO 2012/076489

(56) Entgegenhaltungen:
- EP-A2- 0 340 707
- DE-A1- 19 533 564
- US-A1- 2007 259 979

## Beschreibung

Die Erfindung betrifft ein Verbundmaterial, enthaltend nanoporöse Partikel, insbesondere ein Aerogel Verbundmaterial, ein Verfahren und eine Zusammensetzung zur Herstellung des Verbundmaterials, sowie die Verwendung des Verbundmaterials.

Aerogele und Aerosile sind hochporöse Festkörper, bei denen der überwiegende Teil des Volumens aus Poren besteht. Die Aerogele können beispielsweise auf Silikat-Basis, aber auch auf Kunststoff- oder Kohlenstoff-Basis basieren. Die Poren der Aerogele weisen einen Durchmesser auf, der im Nanometer-Bereich liegt. Infolge des großen Porenvolumens eignen sich die Aerogele insbesondere als Isoliermaterialien mit hervorragenden Isolationseigenschaften bei geringer Dichte. Die Aerogele liegen zunächst als Partikel vor und können unter Verwendung von Bindern einer Formgebung unterworfen und beispielsweise zu Platten gepresst werden.

In der Literatur werden Aerogele auch als Gele mit Luft als Dispersionsmittel bezeichnet. Aerogele können hergestellt werden durch Trocknung eines geeigneten Gels. Unter den Begriff Aerogel werden in Rahmen der vorliegenden Erfindung auch Xerogele und Kryogele verstanden. Der Formgebungsprozess des Aerogels wird während des Sol-Gel-Übergangs abgeschlossen. Nach Ausbildung der festen Gelstruktur kann die äußere Form nur noch durch Zerkleinern, beispielsweise Mahlen, verändert werden.

Aus der EP-A-0 340 707 sind Dämmstoffe der Dichte 0,1 bis 0,4 g/cm³ mit gutem Wärmedämmvermögen und ausreichend hoher Druckfestigkeit bekannt, welche durch Verkleben von Silica-Aerogel-Partikeln mit einem anorganischen oder organischen Bindemittel erhalten werden. Als geeignete anorganische Bindemittel werden beispielhaft Zement, Gips, Kalk und/oder Wasserglas genannt.

Aus der EP 489 319 A2 sind Verbundschaumstoffe auf Basis von Silica-Aerogel-Partikeln und eines Styrol-Polymerisat-Schaumstoffes bekannt. Aus der US-A-6121336 ist bekannt, die Eigenschaften von Polyurethanschäumen durch Einarbeitung von Silica-Aerogelen zu verbessern. Aus der DE 44 41 567 A1 ist bekannt, in Verbundmaterialien aus Aerogelen und anorganischen Bindemitteln Teilchendurchmesser der Aerogel-Partikel kleiner als 0,5 mm zu wählen. Aus der EP 672 635 A1 ist bekannt, in Formkörpern aus Silica-Aerogelen und Bindemitteln zusätzlich Schichtsilikate oder Tonminerale einzusetzen. Aus der US-A-6143400 ist weiterhin bekannt, in Verbundmaterialien aus Aerogel-Partikeln und einem Klebstoff Aerogel-Partikel mit Durchmessern kleiner als 0,5 mm zu verwenden. Aus der DE 195 335 64 A1 sind Verbundmaterialien, enthaltend Aerogel-Partikel, Bindemittel und ein Fasermittel, bekannt. Aus der WO 2007/011988 A2 sind Zusammensetzungen mit so genannten Hybrid-Aerogel-Partikeln und einem Binder bekannt, worin die Aerogel-Partikel kovalent mit dem Binder verbunden sein können.

US 2007/259979 A offenbart organische Aerogele, die mit anorganischen Aerogel-Füllstoffen verstärkt sind. Als organische Aerogele gemäß diesem Dokument werden beispielsweise Polyisocyanate, Polyharnstoffe, Polyurethane, etc. verwendet. Dieses Dokument offenbart ebenfalls nicht ein Verbundmaterial enthaltend ein Bindemittel, welches primäre Aminogruppen aufweist.

Für die Herstellung derartiger Formkörper ist jedoch häufig die Verwendung hoher Bindemittelgehalte notwendig. Darüber hinaus sind viele anwendungstechnische Eigenschaften wie beispielsweise Wärmeleitfähigkeit oder Bruchfestigkeit noch verbesserungsbedürftig. Probleme ergeben sich häufig auch bei der Herstellung der Formkörper. Zahlreiche organische Bindemittel sind aufgrund ihrer hohen Viskosität nicht verwendbar. Die Verwendung niedrigviskoser Dispersionen erfordert hierbei häufig eine zu große Verdünnung mit wässrigen Lösungsmitteln, was den Nachteil hat, dass das in den Dispersionen vorliegende Bindemittel, infolge fehlender Benetzung der Aerogeloberfläche, keine Verbindung mit den in der Regel hydrophoben Silica-Aerogel-Partikeln eingeht.

Aufgabe der Erfindung was es daher, Verbundmaterialien bereitzustellen, die bei relativ geringem Bindemittelanteil eine verbesserte Wärmeleitfähigkeit und eine niedrige Dichte aufweisen können. Die Verbundmaterialien sollen sich außerdem, beispielsweise durch verbesserte Anwendbarkeit von organischen Bindemitteln, auf einfache Weise herstellen lassen.

Die Erfindung betrifft ein Verbundmaterial, enthaltend nanoporöse, insbesondere granuläre, Partikel, insbesondere ein Aerogel, und einen vernetzten Binder auf Basis eines Binders und eines Vernetzers, dadurch gekennzeichnet, dass der Binder ein Polymer ist, welches mit primären Aminogruppen substituiert ist.

Die Erfindung betrifft weiterhin Verfahren zur Herstellung des Verbundmaterials, dadurch gekennzeichnet, dass man die nanoporösen, insbesondere granulären, Partikel, insbesondere das Aerogel, den Binder und den Vernetzer mischt, die Vernetzung durch Reaktion des Vernetzers mit den primären Aminogruppen des Binders durchführt und das erhaltene Material entweder
a) direkt einer Formgebung und gegebenenfalls Härtung unterwirft, oder
b) das Material granuliert, lagert und bei Bedarf der Formgebung und Härtung unterwirft.

Die Erfindung betrifft weiterhin eine Zusammensetzung zur Herstellung des Verbundmaterials, enthaltend nanoporöse, insbesondere granuläre Partikel, insbesondere ein Aerogel, einen Binder und einen Vernetzer, dadurch gekennzeichnet, dass der Binder ein Polymer ist, welches mit primären Aminogruppen substituiert ist.

Soweit nicht anders ausgeführt, werden im Rahmen der vorliegenden Erfindung die verwendeten Begriffe wie folgt definiert und die genannten Messgrößen wie folgt bestimmt:

| | |
|---|---|
| Partikel: | Als Partikel werden Teilchen bezeichnet, die entweder monolithisch sind, d. h. aus einem Stück bestehen, oder aber die im Wesentlichen Partikel mit einem Durchmesser kleiner als der des Teilchens enthalten, die gegebenenfalls durch ein geeignetes Bindemittel verbunden sind, oder durch Pressen zu größeren Teilchen zusammengefügt sind. |
| Porosität: | Verhältnis von Hohlraumvolumen zu Gesamtvolumen, gemessen gemäß Stickstoffadsorption und -desorption (< 100 nm) und Quecksilberporosimetrie (> 100 nm) |
| Hydrophob: | Unter hydrophoben Stoffen werden im Rahmen der vorliegenden Stoffe derartige Stoffe verstanden, die bei Raumtemperatur einen Kontaktwinkel von mehr als 90° gegenüber Wasser aufweisen. |
| Nanoporös: | Unter nanoporös wird verstanden, dass die Poren der Partikel eine Größe von 0,1 bis 500 nm, insbesondere < 200 nm, besonders bevorzugt < 100 nm (d50) aufweisen und die Porosität insbesondere von 50 bis 99, insbesondere 70 bis 99, besonders bevorzugt 80 bis 99 beträgt. |
| Granulär: | bedeutet, dass die Teilchen in einer Größe von 0,1 bis 100 µm, bevorzugt von 1 bis 30 µm (d50) vorliegen und das Verhältnis der längsten Raumachse zur kürzesten Raumachse der Partikel bevorzugt 4:1 bis 1:1 beträgt. |
| Aerosil: | Unter Aerosil wird pyrogene Kieselsäure verstanden, die herstellbar ist durch Hydrolyse von Siliziumtetrachlorid und vorzugsweise eine Primärpartikelgröße von 5-50 nm (d50) aufweist. |
| Molekulargewicht: | Die Molekulargewichtsangaben beziehen sich auf das Zahlenmittel Mn. |
| D₅₀-Wert: | Korngröße, bei der 50 % der Partikel feiner und 50 % größer sind als der angegebene Wert |

Bevorzugte Ausführungsformen der vorliegenden Erfindung werden im Folgenden angegeben, wobei sich die im Einzelnen angegebenen Ausführungsformen auch kombinieren lassen.

Der Anteil an nanoporösen Partikeln im Verbundmaterial beträgt vorzugsweise 1 bis 99,9 Vol-%, bevorzugt 5 bis 99 %, besonders bevorzugt 20 bis 99%.

### Nanoporöse Partikel

Bevorzugte nanoporöse Partikel sind granulär. Die nanoporösen Partikel sind in weiteren bevorzugten Ausführungsformen Aerogele oder Aerosile. Diese können anorganisch, anorganisch-organisch oder organisch sein.

### Aerogel

Geeignete Aerogele für die erfindungsgemäßen Verbundmaterialien sind insbesondere solche auf Basis von Oxiden, insbesondere Siliziumdioxid und Metalloxiden, wie insbesondere Aluminium- Titan- und Zirkoniumoxid. oder solche auf der Basis organischer Stoffe, wie zum Beispiel Melaminformaldehydkondensate (US-A-5,086,085), Resorcinformaldehyd-Kondensate (US-A-4,873,218) sowie Aerogele, die durch Polymerisation von Furfural mit phenolischen Novolak-Harzen herstellbar sind. Besonders geeignet sind Verbindungen, die für die Sol-Gel-Technik geeignet sind, siehe z. B. WO 97/10188 A1, Seite 7, erster Absatz. wie beispielsweise Si- oder AI-Verbindungen. Sie können aber auch auf Mischungen der oben genannten Materialien basieren. Bevorzugt verwendet werden Aerogele enthaltend Si-Verbindungen. Besonders bevorzugt sind Aerogele enthaltend SiO₂, insbesondere SiO₂-Aerogele, die gegebenenfalls organisch modifiziert sind.

Bevorzugte Aerogele weisen folgende Parameter auf:

| | |
|---|---|
| Porosität: | 50 bis 99%, insbesondere 70 bis 99%, besonders bevorzugt 80 bis 99 % |
| Dichte: | von 30 bis 300 g/L, bevorzugt ≤ 150 g/L |
| Partikeldurchmesser: | von 0,1 bis 100 µm, bevorzugt von 1 bis 30 µm (d50) |
| Porendurchmesser: | 0,1 bis 500 nm, insbesondere < 200 nm, besonders bevorzugt < 100 nm |

Darüber hinaus gilt, dass die thermische Leitfähigkeit der Aerogele mit zunehmender Porosität und abnehmender Dichte abnimmt, und zwar bis zu einer Dichte im Bereich von 0,1 g/cm³. Aus diesem Grund sind Aerogele mit Porositäten über 60 % und Dichten zwischen 0,1 und 0,4 g/cm³ bevorzugt. Die Wärmeleitfähigkeit des Aerogel-Granulates sollte vorzugsweise weniger als 40 mW/mK, besonders bevorzugt weniger als 25 mW/mK betragen.

Besonders bevorzugte Aerogele sind Silica-Aerogele, die im Wesentlichen aus amorphem Siliziumdioxid bestehen, aber abhängig von der Art ihrer Herstellung noch organische Verbindungen enthalten können.

Silica-Aerogel-Partikel können in bekannter Weise aus Wasserglaslösung über die Stufen Silica-Hydrogel, Lösungsmittelaustausch und anschließender überkritischer Trocknung hergestellt werden. Die in der Regel vorliegende Perlform ergibt sich hierbei durch das Versprühen eines schnell gelierenden Kieselsäuresols aus einer speziell konstruierten Düse und Gelierung der Tropfen im Fluge. Nähere Einzelheiten hierzu sind in der DE-A-21 03 243 beschrieben. Der Austausch von Hydrogelwasser gegen andere gegen Siliziumdioxid chemisch inerte Flüssigkeiten ist beispielsweise in US-A-2,093,454, US-A-3,977,993 sowie JP-A-53/025 295 beschrieben.

Die Aerogel-Partikel können in monomodaler, bimodaler oder multimodaler Verteilung eingesetzt werden.

In einer bevorzugten Ausführungsform weisen die Aerogel-Partikel hydrophobe Oberflächengruppen auf. Geeignete Gruppen zur dauerhaften Hydrophobisierung sind beispielsweise trisubstituierte Silylgruppen der allgemeinen Formel -Si(R)₃, vorzugsweise Trialkyl- und/oder Triarylsilylgruppen, wobei jedes R unabhängig ein nicht reaktiver, organischer Rest wie C₁-C₁₈-Alkyl oder C₆-C₁₄-Aryl, vorzugsweise C₁-C₆-Alkyl oder Phenyl, insbesondere Methyl, Ethyl, Cyclohexyl oder Phenyl ist, der zusätzlich noch mit funktionellen Gruppen substituiert sein kann. Besonders vorteilhaft zur dauerhaften Hydrophobisierung des Aerogels ist die Verwendung von Trimethylsilylgruppen. Die Einbringung dieser Gruppen kann durch Gasphasenreaktion zwischen dem Aerogel und beispielsweise einem aktivierten Trialkylsilan-Derivat, wie z. B. einem Chlortrialkylsilan oder einem Hexaalkyldisilazan (vgl. R. Iler, The Chemistry of Silica, Wiley & Sons, 1979), geschehen.

### Funktionalisierung der nanoporösen Partikel

Die nanoporösen Partikel, insbesondere Aerogele, können im Binder fixiert werden. Die Fixierung der nanoporösen Partikel im Binder kann durch Einführung von Reaktivgruppen in die Nanostruktur oder durch Einbringen geringer Mengen an Bindemitteln unterstützt werden.

Zur chemischen Funktionalisierung der Nanostruktur eignen sich beispielsweise funktionalisierte chemische Verbindungen wie Alkoxysilane, wie z.B. 3-Aminopropyltriethoxysilan oder 3-Aminopropylmethoxysilan. Diese Reaktivgruppen werden im ersten Schritt über die Silan-Einheit an das Aerogel gebunden und im 2. Schritt erlaubt die Aminogruppe eine chemische Anbindung an den Binder.

Geeignete Systeme zur Funktionalisierung sind sehr ausführlich in der WO 2005103107 A1, Seite 9, Zeile 18 bis Seite 15, Zeile 4, beschrieben und sind in dieser Anmeldung ausdrücklich enthalten.

Als Bindemittel eignen sich polymere Stoffe, beispielsweise Melamin-FormaldehydHarze. Geeignete Polyurethanharze, Polyesterharze oder Epoxidharze sind dem Fachmann bekannt. Solche Harze sind beispielsweise in Encyclopedia of Polymer Science und Technology (Wiley) unter folgenden Kapiteln zu finden: a) Polyesters, unsaturated: Edition 3, Vol. 11, 2004, S. 41-64; b) Polyurethanes: Edition 3, Vol. 4. 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol. 28, 2003, S. 65-74; b) Polyurethanes: Edition 6, Vol. 28, 2003, S. 667-722 und c) Epoxy resins: Edition 6, Vol. 12, 2003, S. 285-303. Des Weiteren können amino- oder hydroxyfunktionalisierte Polymere, insbesondere ein Polyvinylamin oder Polyvinylalkohol eingesetzt werden. Beispiele auf Basis von Melamin- und Phenolharz sowie Acrylamid sind in EP0451535B1 und DE19649796A1 beschrieben.

### Binder

Die erfindungsgemäß zu verwendenden Binder sind Polymere mit einer primären Aminfunktion. Darunter werden Polymere verstanden, die mit primären Aminogruppen substituiert sind. In einer besonders bevorzugten Ausführungsform enthält der Binder wiederkehrende Vinylamin-Einheiten der Formel

-CH₂-CHNH₂-

In einer ganz besonders bevorzugten Ausführungsform handelt es sich bei dem Binder um ein Polyvinylamin, insbesondere mit einer Molmasse von 10000 bis 500000 [g/mol], bevorzugt von 10 bis 400000. Zusätzlich zu den Aminogruppen kann die Polymerkette weitere Substituenten aufweisen, insbesondere Formamid-Reste.
In einer bevorzugten Ausführungsform ist das Polyvinylamin erhältlich durch radikalische oder kationisch initiierte Polymerisation von Vinylformamid und Hydrolyse der Formamid-Gruppen im sauren oder basischen Bereich. Die Hydrolyse kann dabei vollständig oder teilweise erfolgen.

Zusätzlich zu dem erfindungsgemäßen Binder können weitere organische, bzw. anorganische Binder in einer Menge von 0,1-5 Gew.-%, bezogen auf den aminofunktionalisierten Binder, eingesetzt werden. Weitere geeignete organische Binder sind beispielsweise die aus der EP 672 635 A1 bekannten Bindemittel, wie Reaktionsklebstoffe wie Epoxidharz-Klebstoffe, reaktive Polyurethan-Klebstoffe, Phenol-, Resorcin-, Harnstoff- und Melaminformaldehyd-Harze, Silikonharz-Klebstoffe, Polyimidund Polybenzimidazol-Harze, Schmelzklebstoffe wie Ethylenvinylacetat-Copolymere und Polyamide, Wachse, sowie wässrige Dispersionsklebstoffe wie Styrol-Butadien- und Styrol-Acrylester-Copolymerisate. Der Binder kann zusätzlich, wie in der EP 06 72 625 A1 angegeben, Schichtsilikate und/oder Tonmineralien enthalten.

Um eine gute Verteilung der Binder in den Zwickelhohlräumen bei hohem Aerogel-Anteil und möglichst guter Verklebung zu erreichen, sollten in dem Fall, dass man von Bindern in fester Form ausgeht, die Körner der Binder vorzugsweise kleiner als die des Aerogel-Granulates sein. Ebenso kann eine Verarbeitung bei erhöhtem Druck notwendig sein.

Muss der Binder bei erhöhten Temperaturen wie z. B. im Fall von Schmelzklebern oder Reaktionsklebern wie z. B. Melaminformaldehyd-Harzen verarbeitet werden, so muss der Binder so gewählt werden, dass dessen Schmelztemperatur die Schmelztemperatur der Fasern nicht überschreitet.

Der Binder wird im Allgemeinen in einer Menge von 1 bis 50 Vol.-% des Verbundmaterials verwendet, vorzugsweise in einer Menge von 1 bis 30 Vol.-%. Die Auswahl des Binders richtet sich nach den mechanischen und thermischen Anforderungen an das Verbundmaterial sowie den Anforderungen im Hinblick auf den Brandschutz.

### Vernetzer

Der Vernetzer wird eingesetzt, um durch Reaktion mit den Aminogruppen des Binders einen vernetzten Binder zu erhalten. Dieser vernetzte Binder bildet eine Matrix, in die das Aerogel eingebettet ist. In einer besonders bevorzugten Ausführungsform sind der Binder und der vernetzte Binder hydrophil. Daher dringen der Binder und der vernetzte Binder nicht, oder nur in untergeordnetem Maße, in das hydrophobe Aerogel ein. Als Vernetzer eignen sich alle mit dem erfindungsgemäß zu verwendenden Binder reaktionsfähige Verbindungen, insbesondere Aldehyde, Isocyanate, Epoxide, Acrylate, Acrylamide, Ester und Divinylsulfonate. Besonders geeignete Vernetzer sind Glyoxal und Ethylenglykoldimethylether.

### Additive

Das Verbundmaterial kann in wirksamen Mengen weitere Zusatzstoffe wie z. B. Farbstoffe, Pigmente, Füllstoffe, Flammschutzmittel, Synergisten für Flammschutzmittel, Antistatica, Stabilisatoren, Weichmacher und IR-Trübungsmittel enthalten.

Zur Reduktion des Strahlungsbeitrags zur Wärmeleitfähigkeit kann der Verbundstoff IR-Trübungsmittel wie z. B. Metalloxide, Nichtmetalloxide, Metallpulver, z. B. Aluminiumpulver, Kohlenstoff, z. B. Ruß, Graphit, Diamant oder organische Farbstoffe und Farbstoffpigmente enthalten, was besonders für Anwendungen bei hohen Temperaturen vorteilhaft ist. Besonders bevorzugt sind Ruß, Titandioxid, Eisenoxide oder Zirkondioxid. Die vorstehend genannten Materialien können sowohl jeweils alleine als auch in Kombination, d. h. in Form einer Mischung aus mehreren Materialien, Verwendung finden.

Im Hinblick auf die Rissbildung und Bruchfestigkeit kann es weiterhin vorteilhaft sein, wenn in dem Verbundmaterial Fasern enthalten sind. Als Fasermaterial können organische Fasern wie zum Beispiel Polypropylen-, Polyester-, Nylon- oder Melaminformaldehydfasern und/oder anorganische Fasern, wie zum Beispiel Glas-, Mineral- sowie SiC-Fasern und/oder Kohlenstofffasern verwendet werden.

Die Brandklasse des nach der Trocknung erhaltenen Verbundmaterials wird durch die Brandklasse des Aerogels und des anorganischen Bindemittels sowie gegebenenfalls die des Fasermaterials bestimmt. Um eine möglichst günstige Brandklasse des Verbundmaterials zu erhalten (schwer entflammbar oder unbrennbar), sollten die Fasern aus nicht brennbarem Material, z. B. Mineral-, Glas- oder SiC-Fasern, bestehen.

Um eine Erhöhung der Wärmeleitfähigkeit durch die zugegebenen Fasern zu vermeiden, sollte
a) der Volumenanteil der Fasern 0,1 bis 30 %, vorzugsweise 1 bis 10 %, betragen, und
b) die Wärmeleitfähigkeit des Fasermaterials vorzugsweise < 1 W/mK, sein.

Durch geeignete Wahl von Faserdurchmesser und/oder -material kann der Strahlungsbeitrag zur Wärmeleitfähigkeit reduziert und eine größere mechanische Festigkeit erzielt werden. Dazu sollte der Faserdurchmesser vorzugsweise im Bereich von 0,1 bis 30 µm liegen.
Der Strahlungsbeitrag zur Wärmeleitfähigkeit kann besonders reduziert werden, wenn Kohlenstofffasern oder kohlenstoffhaltige Fasern verwendet werden.

Die mechanische Festigkeit kann weiter durch Länge und Verteilung der Fasern im Verbundmaterial beeinflusst werden. Bevorzugt werden Fasern eingesetzt, deren Länge zwischen 0,5 und 10 cm liegt. Für plattenförmige Formkörper können auch Gewebe aus Fasern verwendet werden.

Außerdem kann das Verbundmaterial weitere Hilfsstoffe, wie z. B. Tylose, Stärke, Polyvinylalkohol und/oder Wachsemulsionen enthalten. Sie werden im Stand der Technik großtechnisch bei der Formgebung von keramischen Massen eingesetzt.

Weiterhin kann das Verbundmaterial Zusatzstoffe enthalten, die zu seiner Herstellung benutzt werden, bzw. bei der Herstellung entstehen, so z. B. Gleitmittel zum Verpressen, wie Zinkstearat, oder die Reaktionsprodukte von sauren bzw. säureabspaltenden Härtungsbeschleunigern bei der Verwendung von Harzen.

Die Brandklasse des Verbundmaterials wird durch die Brandklasse des Aerogels, der Fasern und des Bindemittels sowie weiterer gegebenenfalls enthaltener Stoffe bestimmt. Um eine möglichst günstige Brandklasse des Verbundmaterials zu erhalten, sollten vorzugsweise nicht entflammbare Fasertypen, wie z. B. Glas- oder Mineralfasern, oder schwer entflammbare Fasertypen wie z. B. TREVIRA C^{®} oder Melaminharzfasern, Aerogele auf anorganischer Basis, besonders bevorzugt auf der Basis von SiO₂, und schwer entflammbare Bindemittel wie z. B. anorganische Bindemittel oder Harnstoff- und Melaminformaldehydharze, Silikonharzklebstoffe, Polyimid- und Polybenzimidazol-Harze verwendet werden.

### Verarbeitung

Wird das Material in Form von flächigen Gebilden, wie z. B. Platten oder Matten, verwendet, kann es auf mindestens einer Seite mit mindestens einer Deckschicht kaschiert sein, um die Eigenschaften der Oberfläche zu verbessern, so z. B. die Robustheit zu erhöhen, sie als Dampfsperre auszubilden oder gegen leichte Verschmutzbarkeit zu schützen. Die Deckschichten können auch die mechanische Stabilität des Verbundmaterial-Formteils verbessern. Werden auf beiden Flächen Deckschichten verwendet, so können diese gleich oder verschieden sein.

Als Deckschichten eignen sich alle dem Fachmann bekannten Materialien. Sie können nicht-porös sein und damit als Dampfsperre wirken, wie z. B. Kunststofffolien, vorzugsweise Metallfolien oder metallisierte Kunststofffolien, die Wärmestrahlung reflektieren. Es können aber auch poröse Deckschichten verwendet werden, die ein Eindringen von Luft in das Material ermöglichen und damit zu einer besseren Schalldämpfung führen, wie z. B. poröse Folien, Papiere, Gewebe oder Vliese.

Des Weiteren können die Kaschierungen oder Laminierungen beispielsweise unter weitgehender Erhaltung der akustischen Eigenschaften mit so genannten "offenen" Systemen, wie beispielsweise Lochplatten, erfolgen.

Die Deckschichten können selbst auch aus mehreren Schichten bestehen. Die Deckschichten können mit dem Bindemittel befestigt sein, durch das die Fasern und die Aerogel-Partikel untereinander und miteinander verbunden sind, es kann aber auch ein anderer Kleber Verwendung finden.

Die Oberfläche des Verbundmaterials kann auch durch Einbringen mindestens eines geeigneten Materials in eine Oberflächenschicht geschlossen und verfestigt werden. Als Materialien sind z. B. thermoplastische Polymere, wie z. B. Polyethylen und Polypropylen, oder Harze wie z. B. Melaminformaldehydharze geeignet.

Die erfindungsgemäßen Verbundmaterialien weisen Wärmeleitfähigkeiten zwischen 10 und 100 mW/mK, vorzugsweise im Bereich von 10 bis 50 mW/mK, besonders bevorzugt im Bereich von 15 bis 40 mW/mK auf.

### Herstellung der Verbundmaterialien

Die erfindungsgemäßen Verbundmaterialien werden vorzugsweise dadurch hergestellt, dass man ein Aerogel, einen Binder und einen Vernetzer miteinander mischt, wobei der Binder ein Polymer ist, welches mit primären Aminogruppen substituiert ist, die Mischung bei einer Temperatur von vorzugsweise 60-100°C hält unter Reaktion des Vernetzers mit dem Binder, wobei die Masse vorzugsweise in einer Form ausgehärtet wird.

Silica-Aerogel-Partikel mit einem mittleren Durchmesser dₘ zwischen 0,001 und 8 mm werden beispielsweise mit einer wässrigen Suspension, die Schichtsilikate und/oder Tonminerale und mindestens ein organisches oder anorganisches Bindemittel enthält, beschichtet und/oder vermischt und die Masse in einer Form aushärtet.

In einer bevorzugten Ausführungsform des erfindungsgemäßen Verfahrens ist die Form an den Innenseiten feuchtigkeitsdurchlässig und hydrophob ausgerüstet.

Dies kann beispielsweise durch Übereinanderlegen von Metallsieben und geeigneten Polymerfolien erfolgen.

In einer bevorzugten Ausführungsform werden die erfindungsgemäßen Verbundmaterialien kombiniert mit anderen Schaumstoffen, beispielsweise Polyurethan und/oder Polystyrol-Schaumstoffen. In einer besonders bevorzugten Ausführungsform wird das erfindungsgemäße Verbundmaterial mit expandiertem Polystyrol kaschiert. In einer weiteren besonders bevorzugten Ausführungsform wird das erfindungsgemäße Verbundmaterial mit Polystyrol-Schaumstoffen, insbesondere expandiertem Polystyrol, abgemischt. Das Mischungsverhältnis kann hierbei an die jeweiligen Anforderungen ohne Schwierigkeiten angepasst werden und beispielsweise im Volumenverhältnis 10:90 bis 90:10 liegen.

Die erfindungsgemäßen Verbundmaterialien können aufgrund ihrer hervorragenden mechanischen Eigenschaften (beispielsweise erhöhte Bruchfestigkeit) und Wärmedämmeigenschaften (im Allgemeinen können Wärmeleitfähigkeiten von weniger als 0,025 W/mK erreicht werden) auf den verschiedensten Gebieten eingesetzt werden.

Beispiele hierfür sind die Wärmedämmung von Gebäuden, Heizkesseln, Kühlgeräten, Backöfen (vgl. EP-A-0 475 285), Heizungsrohren, Fernheizleitungen, Flüssiggasbehältern, Nachtspeicheröfen sowie Vakuumisolierungen von technischen Geräten verschiedenster Art.

Insbesondere eignen sich die erfindungsgemäßen Verbundmaterialien zur Innendämmung, um einen Niedrigenergie-Standard zu erreichen, zur Außendämmung, gegebenenfalls in Kombination mit zementären und anorganischen Klebstoffen, sowie als Teil einer Kombination aus Grundputz, Amierungsmörtel und Oberputz, zur Dachdämmung, sowie in technischen Anwendungen in Kühlschränken, Transportboxen, SandwichBauteilen, Rohrdämmungen und technischen Schäumen.

Ein weiterer Vorteil der erfindungsgemäßen Verbundmaterialien ist daneben, dass ihre Oberfläche homogen und glatt ist. Die Verbundmaterialien lassen sich außerdem besonders einfach durch Sägen, Schleifen oder Schneiden bearbeiten. Es fallen hierbei keine einzelnen Aerogel-Partikel heraus, so dass auch die bearbeiteten Oberflächen homogen erscheinen.

### Beispiele

### Beispiel 1 (Erfindung)

Es wurden 200 g eines organisch modifizierten SiO₂-Aerogels (99,2 Vol.-%), 300 g Polyvinylamin Lupamin^{®} Typ 9095 (10 % wässrigen Lösung), 20 g Wasser und 1,7 g Glyoxal als Vernetzer vermischt und in eine Form (Grundfläche: 20 cm*20 cm) gegeben. Das Aerogel-Granulat hatte eine Korngröße im Bereich von 0,1 bis 4,0 mm, eine Schüttdichte von 80 bis 100 kg/m³ und eine Wärmeleitfähigkeit von ca. 18 mW/m*K. Die Platte wurde im Trockenschrank bei 70°C getrocknet. Der als mechanisch stabile Platte (20 cm *20 cm*4 cm) erhaltene Formkörper hatte eine Dichte von 130 g/l und eine Wärmeleitfähigkeit von 16,7 mW/m*K.

### Beispiel 2 (Vergleich)

780 g Polyvinylamin Lupamin® Typ 9095 (10% wässrige Lösung,) wurden mit 780g eines organisch modifizierten SiO2-Aerogels aus Beispiel 1, 78 g Wasser und 7 g Glyoxal als Vernetzer vermischt. Die so erhaltene Masse wurde in eine Form 50 cm * 50cm *5 cm gegeben und zwischen 2 Heizplatten (bei 90 °C) gepresst. Nach 3 Stunden wurde die Platte entformt und bei 70°C in einem Trockenschrank bis zur Massenkonstanz getrocknet.

Der als mechanisch stabile Platte (50 cm *50 cm*5cm) erhaltene Formkörper hat eine Dichte von 140 g/l und eine Wärmeleitfähigkeit von 16,2 mW/m*K.

An der Platte wurden physikalische Messungen durchgeführt, deren Ergebnisse in folgender Tabelle zusammengefasst sind:

| | |
|---|---|
| Lambda-Wert: | 16,2 mW/m*K |
| Druckfestigkeit: | 194 kPa |
| Biegefestigkeit: | 100 kPa |
| Dichte: | 140 g/l |

### Beispiel 3

Eine 2cm dicke Scheibe aus der Platte aus Beispiel 1 (Dichte 130 g/l) wurde geschnitten und oben und unten mit einer 1 cm dicken Neopor-Platte beklebt. Die Dichte und die mechanischen Eigenschaften werden weiter verbessert:

| | |
|---|---|
| Lambda-Wert: | 22,4 mW/m*K |
| Dichte: | 60g/l |
| Biegefestigkeit: | 222 kPa |
| Druckfestigkeit: | 170 kPa |

### Beispiel 4

Es wurden 100 g eines organisch modifizierten SiO₂-Aerogels (ca. 45 Vol.-%), 200g Polyvinylamin Lupamin® Typ 9095 (10% wässrige Lösung), 20g Wasser und 1,7 g Glyoxal als Vernetzer vermischt und in eine Form mit 30 g Neopor® Typ P5300 (ca, 55 Vol.-%) (Grundfläche: 20cm*20cm) gegeben. Die Platte wurde im Trockenschrank bei 60°C getrocknet.

Der als mechanisch stabile Platte (20 cm *20 cm*4cm) erhaltene Formkörper weist folgende Werte auf:

| | |
|---|---|
| Lambda-Wert: | 24 mW/m*K |
| Dichte: | 100 g/l |

## Patentansprüche

1. Verbundmaterial, enthaltend nanoporöse, insbesondere granuläre, Partikel, insbesondere ein Aerogel, und einen vernetzten Binder auf Basis eines Binders und eines Vernetzers, **dadurch gekennzeichnet, dass** der Binder ein Polymer ist, welches mit primären Aminogruppen substituiert ist.

2. Verbundmaterial gemäß Anspruch 1, **dadurch gekennzeichnet, dass** das Aerogel ein gegebenenfalls organisch modifiziertes SiO₂-Aerogel ist.

3. Verbundmaterial nach wenigstens einem der vorhergehenden Ansprüche, **dadurch gekennzeichnet, dass** die Partikel eine Partikelgröße (D₅₀-Wert) von 0,1 bis 100 µm, insbesondere 1-30 µm, aufweisen.

4. Verbundmaterial nach wenigstens einem der vorhergehenden Ansprüche, **dadurch gekennzeichnet, dass** die Partikel eine Porosität von 50 bis-99 % aufweisen.

5. Verbundmaterial nach wenigstens einem der vorhergehenden Ansprüche, **dadurch gekennzeichnet, dass** der Binder wiederkehrende polymerisierte Vinylamin-Einheiten aufweist.

6. Verbundmaterial nach wenigstens einem der vorhergehenden Ansprüche, **dadurch gekennzeichnet, dass** der Binder ein Polyvinylamin ist, vorzugsweise mit einer Molmasse von 10000 bis 500000 g/mol.

7. Verbundmaterial nach wenigstens einem der vorhergehenden Ansprüche, **dadurch gekennzeichnet, dass** der Vernetzer Gruppen aufweist, die mit den Aminogruppen des Binders reagieren.

8. Verbundmaterial nach wenigstens einem der vorhergehenden Ansprüche, **dadurch gekennzeichnet, dass** der Vernetzer Glyoxal ist.

9. Zusammensetzung zur Herstellung eines Verbundmaterials gemäß wenigstens einem der vorhergehenden Ansprüche, enthaltend nanoporöse Partikel, insbesondere ein Aerogel, einen Binder und einen Vernetzer, **dadurch gekennzeichnet, dass** der Binder ein Polymer ist, welches mit primären Aminogruppen substituiert ist.

10. Zusammensetzung gemäß Anspruch 9, **dadurch gekennzeichnet, dass** auf 100 Gewichtsteile Aerogel enthalten sind: 10 bis 25 Gewichtsteile des Binders und 0,5 bis 5 Gewichtsteile des Vernetzers.

11. Verfahren zur Herstellung des Verbundmaterials gemäß wenigstens einem der vorhergehenden Ansprüche, **dadurch gekennzeichnet, dass** man die Partikel, den Binder und den Vernetzer mischt, die Vernetzung durch Reaktion des Vernetzers mit den Aminogruppen des Binders durchführt und das erhaltene Material entweder
a) direkt einer Formgebung und gegebenenfalls Härtung unterwirft, oder
b) das Material granuliert, lagert und bei Bedarf der Formgebung und Härtung unterwirft.

12. Formkörper, insbesondere Platten, auf Basis eines Verbundmaterials gemäß wenigstens einem der Ansprüche 1 bis 8, und eines weiteren Schaumstoffs, insbesondere Polyurethan oder Polystyrol.

13. Formkörper gemäß Anspruch 12, **dadurch gekennzeichnet, dass** der weitere Schaumstoff auf das Verbundmaterial gemäß wenigstens einem der Ansprüche 1 bis 8 kaschiert ist.

14. Formkörper gemäß Anspruch 12, **dadurch gekennzeichnet, dass** der weitere Schaumstoff mit dem Verbundmaterial gemäß wenigstens einem der Ansprüche 1 bis 8 gemischt ist.

15. Verwendung eines Materials gemäß wenigstens einem der Ansprüche 1 bis 8 und 12 bis 14, zur Wärme- oder Schalldämmung.

## Claims

1. A composite material comprising nanoporous, more particularly granular, particles, more particularly an aerogel, and a crosslinked binder based on a binder and a crosslinker, wherein the binder is a polymer substituted with primary amino groups.

2. The composite material according to claim 1, wherein the aerogel is an optionally organomodified SiO₂ aerogel.

3. The composite material according to either or both of the preceding claims, wherein the particles have a particle size (D₅₀ value) of 0.1 to 100 µm and more particularly 1-30 µm.

4. The composite material according to at least one of the preceding claims, wherein the particles have a porosity of 50 to 99%.

5. The composite material according to at least one of the preceding claims, wherein the binder includes recurring polymerized units of vinylamine.

6. The composite material according to at least one of the preceding claims, wherein the binder is a polyvinylamine, preferably with a molar mass of 10 000 to 500 000 g/mol.

7. The composite material according to at least one of the preceding claims, wherein the crosslinker has groups that react with the amino groups of the binder.

8. The composite material according to at least one of the preceding claims, wherein the crosslinker is glyoxal.

9. A composition for producing a composite material according to at least one of the preceding claims, comprising nanoporous particles, more particularly an aerogel, binder and a crosslinker, wherein the binder is a polymer substituted with primary amino groups.

10. The composition according to claim 9, wherein there are 10 to 25 parts by weight of binder and 0.5 to 5 parts by weight of crosslinker per 100 parts by weight of aerogel.

11. A process for producing the composite material according to at least one of the preceding claims, which comprises mixing the particles, the binder and the crosslinker, performing the crosslinking by reacting the crosslinker with the amino groups of the binder, and the material obtained is either
a) subjected directly to a shaping operation and optionally curing, or
b) pelletized, stored and subjected to shaping and curing as or when required.

12. A shaped article, more particularly a plate, based on a composite material according to at least one of claims 1 to 8 and a further foam, more particularly polyurethane or polystyrene.

13. The shaped article according to claim 12, wherein the further foam is laminated on the composite material according to at least one of claims 1 to 8.

14. The shaped article according to claim 12, wherein the further foam is mixed with the composite material according to at least one of claims 1 to 8.

15. The use of a material according to at least one of claims 1 to 8 and 12 to 14 for thermal or acoustical insulation.

## Revendications

1. Matériau composite contenant des particules nanoporeuses, notamment granulaires, notamment un aérogel, et un liant réticulé à base d'un liant et d'un agent de réticulation, **caractérisé en ce que** le liant est un polymère qui est substitué avec des groupes amino primaires.

2. Matériau composite selon la revendication 1, **caractérisé en ce que** l'aérogel est un aérogel SiO₂ éventuellement modifié organiquement.

3. Matériau composite selon au moins l'une quelconque des revendications précédentes, **caractérisé en ce que** les particules présentent une taille de particule (valeur D₅₀) de 0,1 à 100 µm, notamment de 1 à 30 µm.

4. Matériau composite selon au moins l'une quelconque des revendications précédentes, **caractérisé en ce que** les particules présentent une porosité de 50 à 99 %.

5. Matériau composite selon au moins l'une quelconque des revendications précédentes, **caractérisé en ce que** le liant comprend des unités de répétition vinylamine polymérisées.

6. Matériau composite selon au moins l'une quelconque des revendications précédentes, **caractérisé en ce que** le liant est une polyvinylamine, de préférence ayant une masse molaire de 10 000 à 500 000 g/mol.

7. Matériau composite selon au moins l'une quelconque des revendications précédentes, **caractérisé en ce que** l'agent de réticulation comprend des groupes qui réagissent avec les groupes amino du liant.

8. Matériau composite selon au moins l'une quelconque des revendications précédentes, **caractérisé en ce que** l'agent de réticulation est le glyoxal.

9. Composition pour la fabrication d'un matériau composite selon au moins l'une quelconque des revendications précédentes, contenant des particules nanoporeuses, notamment un aérogel, un liant et un agent de réticulation, **caractérisée en ce que** le liant est un polymère qui est substitué avec des groupes amino primaires.

10. Composition selon la revendication 9, **caractérisée en ce qu'**elle contient, pour 100 parties en poids d'aérogel : 10 à 25 parties en poids du liant et 0,5 à 5 parties en poids de l'agent de réticulation.

11. Procédé de fabrication du matériau composite selon au moins l'une quelconque des revendications précédentes, **caractérisé en ce que** les particules, le liant et l'agent de réticulation sont mélangés, la réticulation est réalisée par réaction de l'agent de réticulation avec les groupes amino du liant, et le matériau obtenu est soit
a) directement soumis à un façonnage et éventuellement un durcissement, soit
b) granulé, entreposé et au besoin soumis au façonnage et au durcissement.

12. Corps moulés, notamment plaques, à base d'un matériau composite selon au moins l'une quelconque des revendications 1 à 8, et d'une mousse supplémentaire, notamment de polyuréthane ou de polystyrène.

13. Corps moulés selon la revendication 12, **caractérisés en ce que** la mousse supplémentaire est revêtue sur le matériau composite selon au moins l'une quelconque des revendications 1 à 8.

14. Corps moulés selon la revendication 12, **caractérisés en ce que** la mousse supplémentaire est mélangée avec le matériau composite selon au moins l'une quelconque des revendications 1 à 8.

15. Utilisation d'un matériau selon au moins l'une quelconque des revendications 1 à 8 et 12 à 14 pour l'isolation thermique et sonore.
